Europäisches Patentamt

**European Patent Office**

Office européen des brevets

(19)

(11) Numéro de publication: **0 190 521**
**B1**

(12) **FASCICULE DE BREVET EUROPEEN**

(45) Date de publication du fascicule du brevet:
**24.08.88**

(51) Int. Cl.⁴: **A 23 C 19/064**

(21) Numéro de dépôt: **85402468.4**

(22) Date de dépôt: **11.12.85**

(54) **Procédé de fabrication d'un fromage hyposodé, notamment fromage de gruyère hyposodé.**

(30) Priorité: **18.12.84 FR 8419382**

(43) Date de publication de la demande:
**13.08.86 Bulletin 86/33**

(45) Mention de la délivrance du brevet:
**24.08.88 Bulletin 88/34**

(84) Etats contractants désignés:
**BE CH DE GB LI NL**

(56) Documents cités:
**FR - A - 2 422 342**
**FR - A - 2 493 681**
**FR - A - 2 520 206**
**GB - A - 2 015 863**

**PROCEEDINGS OF THE 6TH INTERNATIONAL
CONGRESS OF FOOD SCIENCE AND TECHNOLOGY,
1983, vol. 1, pages 145-146; J. BUCKLEY et al.: "Effect
of total and partial substitution of sodium on the quality
of cheddar cheese"**

(73) Titulaire: **Curtat, Gilbert Edouard, 17, rue Sauria,
F-39800 Poligny (FR)**

(72) Inventeur: **Curtat, Gilbert Edouard, 17, rue Sauria,
F-39800 Poligny (FR)**

(74) Mandataire: **Bezault, Jean et al, Cabinet Netter 40, rue
Vignon, F-75009 Paris (FR)**

ACTORUM AG

## Description

La présente invention se rapporte à la fabrication d'un fromage hyposodé, notamment de fromage de gruyère hyposodé, et aux fromages obtenus par la mise en œuvre de ce procédé.

La fabrication des fromages fait intervenir des opérations de salage afin notamment de favoriser l'égouttage du sérum ou petit-lait à partir du caillé. Il en résulte dans le fromage affiné la présence d'une quantité de sel, à savoir de chlorure de sodium, qui le rend impropre à la consommation par les personnes devant suivre, pour des raisons médicales, un régime hyposodé.

Ceci s'applique notamment aux fromages à pâte cuite pressée, comme les fromages de gruyère, dont certains d'entre eux, tels le comté, l'emmenthal et le fribourg, sont très réputés, leur fabrication répondant à des conditions strictes pour qu'ils puissent bénéficier de leurs appellations propres.

En ce qui concerne plus particulièrement le comté, le fromage bénéficiant de l'appellation d'origine «gruyère de comté» ou «comté» est un fromage fabriqué exclusivement avec du lait de vache, mis en œuvre à l'état cru emprésuré, à pâte ferme, cuite, pressée et salée en surface ou en saumure, en forme de meule, à croûte frottée, solide et grenée, contenant au minimum 45 grammes de matières grasse pour 100 grammes de fromage après complète dessication et dont la teneur en matières sèches ne doit pas être inférieure à 65 grammes pour 100 grammes de fromage.

La fabrication du comté comprend essentiellement le caillage du lait avec de la présure et du levain, la découpe du caillé en petits fragments, le brassage du caillé sous chauffage, puis le soutirage du caillé et son moulage sous presse pour obtenir une meule d'un diamètre de 40 à 70 centimètres et d'une hauteur de 9 à 13 centimètres. Après démoulage, la meule subit un affinage pendant une période de 90 jours au moins, à une température ne dépassant pas 19°C, au cours de laquelle elle est retournée puis frottée régulièrement avec du sel, c'est-à-dire du chlorure de sodium, pour obtenir la croûte dure caractéristique du comté.

Pendant l'affinage, le fromage absorbe ainsi une quantité de chlorure de sodium relativement importante qui rend le comté impropre à la consommation des personnes devant suivre, pour des raisons médicales, un régime alimentaire hyposodé.

De façon analogue, les fromages de gruyère autres que le comté sont obtenus en moulant d'abord sous presse une pâte cuite de caillé, les températures de cuisson variant suivant le type de gruyère fabriqué. Après démoulage, les meules sont affinées dans des conditions d'affinage qui diffèrent suivant le type de gruyère. Ces meules subissent également un salage en surface ou en saumure avant et pendant l'affinage. En fin d'affinage, ces fromages présentent également une teneur en chlorure de sodium relativement importante qui ne peut convenir à des personnes devant suivre un régime alimentaire hyposodé.

Ce même inconvénient se rencontre d'une façon générale avec tous les fromages qui absorbent au cours de leur fabrication, spécialement lors de leur affinage, une quantité importante de chlorure de sodium. Ceci est le cas non seulement des fromages à pâte pressée cuite déjà mentionnés, mais d'autres fromages, tels les fromages à pâte pressée non cuite, comme le cantal, la tomme, la râclette, la mimolette, l'edam, etc., les fromages à pâte molle, comme le brie, le camembert, etc.

On à déjà proposé des procédés de fabrication de fromages hyposodés. Ainsi le document FR-A-2 520 206 propose un procédé pour la fabrication de fromage de gruyère hyposodé, notamment de comté hyposodé qui comporte un affinage lent, sans apport de sel, à basse température, au cours duquel la meule de fromage est régulièrement retournée et frottée en faisant appel à de l'eau pure; ce procédé connu permet de fabriquer des fromages de gruyère à faible teneur en chlorure de sodium et qui conviennent ainsi aux personnes devant suivre un régime alimentaire hyposodé. Toutefois, ces fromages de gruyère hyposodés ne présentent pas toutes les propriétés organoleptiques caractéristiques des fromages de gruyère traditionnels, normalement salés.

L'un des buts de l'invention est de fabriquer un fromage hyposodé dont les propriétés organoleptiques sont pratiquement identiques à celles du fromage correspondant traditionnel.

Un autre but de l'invention est de fabriquer un fromage de gruyère hyposodé, notamment de comté hyposodé, ayant pratiquement les mêmes propriétés organoleptiques que le fromage de gruyère traditionnel, et convenant pour les personnes soumises à un régime alimentaire hyposodé.

Selon la caractéristique essentielle du procédé de l'invention, on utilise pour mettre en œuvre l'opération de salage du fromage une solution concentrée comportant principalement un sel de magnésium.

On a constaté que, de façon surprenante, un tel traitement permettait d'obtenir un fromage qui, tout en possédant une très faible teneur en chlorure de sodium, présentait cependant pratiquement les mêmes propriétés organoleptiques qu'un fromage traditionnel.

En outre, la présence du magnésium dans le fromage ainsi obtenu semble particulièrement avantageuse car ce corps jouerait un rôle prédominant dans la prévention des maladies cardio-vasculaires.

La solution concentrée utilisée pour la mise en œuvre de l'invention est une solution aqueuse qui est constituée par un sous-produit qui résulte de l'extraction physique naturelle du chlorure de sodium à partir de l'eau de mer et qui contient principalement un sel de magnésium ainsi qu'une faible teneur résiduelle en chlorure de sodium.

Ce sous-produit, que l'on trouve déjà dans le commerce, a été utilisé jusqu'à présent pour des applications n'ayant aucun rapport avec la fabrication de fromage.

Le magnésium de la solution concentrée est présent principalement sous la forme de chlorure de magnésium hexahydraté, de préférence à raison de 250 à 900 grammes par litre de solution.

Il s'est avéré particulièrement avantageux d'utiliser des solutions contenant entre 600 et 800 grammes de magnésium hexa-hydraté par litre de solution, remarque étant faite que plus la teneur en magnésium est élevée, plus la teneur en chlorure de sodium est faible. En fait, pour des solutions contenant respectivement 600 grammes et 800 grammes de chlorure de magnésium hexa-hydraté par litre de solution, la teneur en chlorure de sodium est respectivement de 28,5 grammes et 10 grammes par litre de solution.

Une telle solution comprend habituellement, outre le chlorure de magnésium hexa-hydraté déjà mentionné, d'autres sels minéraux, en particulier du sulfate de magnésium, de l'oxyde de magnésium, du chlorure de potassium et du chlorure de sodium, tous en faible teneur.

Lorsque le procédé de l'invention est appliqué à la fabrication d'un fromage de gruyère, la meule obtenue après démoulage du caillé moulé sous presse est soumise à un affinage au cours duquel la meule est traitée par ladite solution concentrée.

Dans le cas particulier de la fabrication de comté, la meule obtenue après démoulage du caillé moulé sous presse est soumise à un affinage en cave chaude, à température de l'ordre de 16 à 18°C, pendant une période d'au moins 90 jours, au cours de laquelle la meule est régulièrement retournée puis frottée avec un torchon imprégné de la solution concentrée.

L'affinage est précédé facultativement d'un pré-affinage en cave froide à une température de l'ordre de 6 à 12°C au cours duquel la meule subit un traitement analogue par la solution concentrée.

Si on le désire, l'affinage, ou le pré-affinage s'il existe, débute par une immersion de la meule dans ladite solution concentrée pendant une période d'environ 24 heures.

Le fromage de comté ainsi obtenu a une teneur en sodium nettement inférieure à 100 milligrammes/100 grammes, le plus souvent inférieure à 60 milligrammes/100 grammes, ce qui lui permet d'être qualifié de comté hyposodé.

L'invention va maintenant être décrite plus en détail dans son application à la fabrication d'un comté hyposodé.

La fabrication du comté hyposodé commence d'abord par la fabrication de la meule en suivant les mêmes étapes de fabrication que prévues pour un comté traditionnel qui doit être normalement salé. Ces étapes de fabrication traditionnelle sont d'abord rappelées brièvement ici.

Le comté est fabriqué dans un établissement appelé «fruitière» dans lequel est rassemblée le lait produit journellement dans les fermes avoisinantes.

Dans un premier temps, on fait cailler le lait en ajoutant de la présure et un levain. Le caillé se rétracte et laisse s'écouler le petit lait.

On découpe alors la masse caillé en menus fragmentes de la grosseur d'un grain de blé.

On réalise ensuite une opération de brassage, qui dure environ une heure, pendant laquelle la masse caillée est chauffée à une température de 50 à 55°C et brassée. Cette opération favorise la séparation des grains de caillé du sérum ou petit lait.

Le fromage est alors soutiré du petit lait par une opération manuelle ou mécanique. Lorsque cette opération est effectuée manuellement, le maître fromager plonge dans la cuve une toile de lin qu'il tient à bout de bras et qui lui permet de retirer la caillé en une seule opération. Il existe également des procédés mécaniques qui permettent de réaliser un soutirage sous vide ou à l'aide d'une pompe à caillé.

Le fromage, ainsi emmailloté dans sa toile de lin, est alors placé dans les moules où il prend sa forme caractéristiques de meule, le moulage étant effectué sous presse. Le fromage est maintenu sous presse dans les moules pendant une durée de 12 à 24 heures, à une température relativement basse, de l'ordre de 8 à 12°C. Après démoulage, les meules sont alors conservées dans la cave froide de la fruitière pendant environ deux à trois semaines jusqu'à ce que l'affineur vienne les charger pour les soumettre à affinage dans ses caves. Pendant cette période, qu'on peut qualifier de pré-affinage, les meules, dans la fabrication traditionnelle, sont retournées et frottées avec du sel (chlorure de sodium), par exemple à l'aide d'un torchon de laine ou de jute, environ tous les deux jours.

Ce sont ces opérations de frottage au sel, qui sont poursuivies pendant toute la durée de l'affinage, qui permettent la formation de la croûte dure du comté.

L'affinage proprement dit des meules commence alors dans les caves de l'affineur. Les meules, placées en cave chaude, à une température de l'ordre de 16 à 18°C, sont périodiquement retournées et frottées au sel, par exemple tous les deux ou trois jours.

La période d'affinage des meules, c'est-à-dire la période pendant laquelle sont effectuées les opérations de frottage au sel après retournement pour l'obtention de la croûte, doit être d'au moins 90 jours, y compris la période de «pré-affinage».

Au cours du troisième mois d'affinage, les opérations de frottage après retournement des meules peuvent n'être réalisées qu'une ou deux fois par semaine.

Quand l'affinage est terminé, les meules sont transportées en cave froide où elles sont conservées jusqu'à la vente, l'opération de salage avec retournement puis frottage des meules étant poursuivie à raison d'environ une fois par semaine ou une fois toutes les deux semaines.

Au cours de cette phase d'affinage pendant laquelle la croûte du comté se forme par salage, le fromage absorbe progressivement une quantité importante de sel qui, en fin d'affinage, est de l'ordre de 600 milligrammes/100 grammes. Un tel fromage ne peut donc convenir à la consommation des personnes devant suivre un régime alimentaire hyposodé.

Le procédé mis au point par le Demandeur permet de fournir un comté hyposodé grâce à l'utilisation d'une solution de traitement particulière au cours de l'affinage.

Les étapes de fabrication du fromage en lui-même, jusqu'à l'obtention des meules après moulage sous presse du caillé, sont identiques à celles utilisées pour la fabrication d'un comté traditionnel.

Conformément à l'invention, la meule obtenue après démoulage du caillé moulé sous presse est soumise à une opération d'affinage en cave chaude à une température de l'ordre de 16 à 18°C pendant une durée d'au moins 90 jours, au cours de laquelle la meule est régulièrement retournée puis frottée en faisant appel à la solution concentrée définie précédemment. Il s'agit d'une solution concentrée qui contient principalement un sel de magnésium.

Dans un mode d'exécution préféré de l'invention, on utilise comme solution concentrée, un sous-produit qui résulte de l'extraction physique du chlorure de sodium à partir de l'eau de mer qui est disponible dans le commerce sous la dénomination «Solumag» auprès de la Société des Salins du Midi.

Ce produit du commerce, qui contient principalement du chlorure de magnésium hexa-hydraté, ainsi que d'autres sels minéraux, en particulier du sulfate de magnésium, du chlorure de sodium, du chlorure de potassium et de l'oxyde de magnésium, est disponible selon différentes concentrations de ses composants.

Il existe ainsi les produits Solumag 270, Solumag 435, Solumag 600 et Solumag 800 qui contiennent respectivement 270, 435, 600 et 800 grammes de chlorure de magnésium hexa-hydraté par litre de solution aqueuse. Pour la mise en œuvre du procédé de l'invention, on préfère tout particulièrement les produits Solumag 600 et Solumag 800 qui contiennent respectivement 600 et 800 grammes de chlorure de magnésium hexa-hydratéet respectivement 28,5 et 10 grammes de chlorure de sodium par litre de solution.

Cette solution peut être «frappée», c'est-à-dire subir un traitement par abaissement de température, pour diminuer la concentration de certains sels minéraux présents dans cette compositions.

Le tableau suivant donne la composition des produits Solumag 600 et 800 «frappées».

| Sels cristallisés et/ou sels anhydres | SOLUMAG 600 (g/l) | SOLUMAG 800 (g/l) |
| --- | --- | --- |
| $MgCl_2, 6H_2O$ | 600 | 800 |
| $MgSO_4, 7H_2O$ | 77 | 54 |
| NaCl | 28,5 | 10 |
| KCl | 27,5 | 10 |
| MgO | 131,5 | 167,4 |

Pendant la durée d'au moins 90 jours mentionnée plus haut, les meules sont périodiquement retournées et frottées en faisant appel à la solution concentrée ci-dessus, par exemple tous les deux ou trois jours. Ces opérations de traitement peuvent être plus espacées en fin d'affinage; au cours du troisième mois d'affinage, elles peuvent n'être réalisées qu'une fois par semaine.

Dans un mode d'exécution préféré du procédé de l'invention, l'affinage commence directement après la fabrication de la meule, sans pré-affinage.

Il entre toutefois également dans le cadre de l'invention de réaliser un pré-affinage en cave froide à une température de l'ordre de 6 à 12°C, au cours duquel les meules sont retournées puis frottées au moyen de la même solution concentrée.

Dans le procédé selon l'invention, le traitement des meules pendant le pré-affinage, s'il existe, et pendant l'affinage, comprend habituellement des opérations au cours desquelles les meules sont retournées et frottées ou faisant appel à la solution concentrée.

L'invention prévoit cependant de débuter le pré-affinage, s'il existe, ou l'affinage, par une immersion des meules dans la solution concentrée pendant une période d'environ 24 heures.

Lorsque l'affinage est terminé, le comté affiné est alors conservé en cave froide, jusqu'à la vente, sans qu'il soit nécessaire de traiter à nouveau les meules. Il présente une croûte comparable à celle du comté traditionnel.

On décrit maintenant deux essais comparatifs effectués sur des meules de gruyère en mettant en œuvre le procédé de l'invention.

Un premier essai a porté sur quatre meules de gruyère issues d'un même lait et d'une même technologie de fabrication, s'agissant de meules produites dans une même cuve.

Une première analyse a été effectuée, avant salage, sur le fromage âgé de 1 jour, c'est-à-dire 24 heures après l'addition de la présure dans le lait. Au bout d'un jour, deux meules ont été salées avec du sel ordinaire (chlorure de sodium) selon la tecnique traditionnelle; il s'agit des meules témoins T1 et T2.

Deux autres meules ont été frottées en faisant appel à une solution concentrée selon l'invention contenant 600 grammes de chlorure de magnésium hexa-hydraté par litre de solution. Il s'agit des meules d'essais E3 et E4. La meule E3 a d'abord été immergée 24 heures dans la solution concentrée et frottée une fois par semaine en faisant appel à cette même solution. La meule E4 a été immergée 48 heures dans la solution précitée et frottée une fois par semaine en faisant appel à cette même solution.

Des prélèvements ont été effectués à la station de l'INRA de Poligny à l'aide d'un emporte-pièce sur toute l'épaisseur du fromage et les analyses ont été réalisées sur un échantillon représentatif de l'ensemble de la carotte prélevée, excepté la croûte qui est écartée.

Des pesées et analyses ont été faites à la réception des fromages, avant et après immersion dans la solution concentrée pour les fromages E3 et E4; puis à 6 et 13 semaines sur les quatre fromages; et à 20 et 24 semaines sur le fromage E4 et sur un des fromages témoins.

Les analyses ont porté sur la teneur en sodium, en magnésium et en potassium des fromages. D'autre part, ces fromages ont été examinés du point de vue de la présentation et dégustés par un jury de dix-huit personnes.

Dans un deuxième essai, des demi-meules de fromage ont été frottées en utilisant la même solution concentrée que dans l'essai précédent, et les analyses ont porté sur les fromages en fin d'affinage.

Les résultats de ces deux essais sont les suivants.

En ce qui concerne le premier essai, la perte du poids au cours de l'affinage n'est pas significativement différente entre les fromages essais et les fromages témoins. `

Pour ce qui concerne la teneur en éléments minéraux, on constate que le fromage frais avant salage contient 30 milligrammes de sodium pour 100 grammes de fromage.

Après 105 jours, cette teneur a atteint, pour les témoins T1 et T2 respectivement 211 et 220 milligrammes pour 100 grammes de fromage, pour at- teindre finalement 258 milligrammes chez le témoin T2 au bout de 179 jours, ces teneurs étant rapportées à 100 grammes de fromage.

En revanche, les fromages essais E3 et E4 contenaient seulement 53 et 64 milligrammes de sodium au bout de 105 jours et 75 milligrammes au bout de 179 jours pour E4, c'est-à-dire après un affinage de 24 semaines. Les essais en cours avec une solution concentrée à 800 grammes/litre de chlorure de magnésium hexa-hydraté, trois fois plus pauvre en chlorure de sodium que la solution à 600 grammes/litre, doivent abaisser encore de façon sensible la teneur en sodium du fromage.

Ainsi, les fromages essais contiennent près de 3,5 fois moins de sodium que les fromages témoins.

Par contre, les fromages essais sont plus riches en magnésium puisqu'ils renferment de 2,5 à 3,5 fois plus de cet élément que les fromages témoins, respectivement à 105 et 179 jours. Une amélioration sensible peut être obtenue si l'on utilise la solution à 800 grammes/litre de chlorure de magnésium hexa-hydraté, au lieu de la solution à 600 grammes/litre.

La teneur en potassium est sensiblement la même dans les fromages essais d'une part et dans les fromages témoins d'autre part.

L'expertise des fromages témoins et des fromages essais, réalisée par la station de l'INRA de Poligny, a montré que leurs caractères organoleptiques étaient peu différents, comme le montre le tableau ci-dessous, qui donne les valeurs moyennes obtenues lors de deux dégustations: à 105 jours pour E3 et T1 (trois mois d'affinage) et à 179 jours pour E4 et T2. Les différentes propriétés du fromage ont été notées à chaque fois sur une échelle de 0 à 5 et la valeur indiquée dans le tableau est la moyenne des notes données par les 18 personnes composant le jury.

| Fro-mage | Acidité | Amer-tume | Fruité | Mauvais goût | Dureté de la pâte |
|---|---|---|---|---|---|
| T1 | 1,4 | 2,05 | 1,45 | 2,10 | 2,05 |
| E3 | 1,60 | 2,5 | 1,55 | 3,10 | 2,70 |
| T2 | 1,9 | 2,2 | 2,0 | 2,2 | 3,1 |
| E4 | 1,7 | 3,3 | 1,55 | 3,5 | 3,15 |

Dans le deuxième essai, les demi-meules ont été traitées au moyen de la même solution concentrée que dans le premier essai, mais ces meules n'ont pas été immergées dans cette solution, comme dans le cas du premier essai.

Cet essai a porté sur quatre fromages issus de quatre fruitières différentes et sur un fromage témoin.

En fin d'affinage, la teneur en sodium des quatre fromages d'essai était comprise entre 51,0 milligrammes et 79,0 milligrammes de sodium pour 100 grammes de fromage contre 290 milligrammes/100 grammes pour le fromage témoin. De même, la teneur en magnésium des quatre fromages d'essai était comprise entre 60,0 et 105,0 milligrammes/100 grammes contre 35,0 milligrammes/100 grammes pour le fromage témoin.

Ces essais montrent que les fromages obtenus conformément au procédé de l'invention sont nettement moins riches en sodium que les fromages traditionnels et qu'ils comportent une teneur en magnésium beaucoup plus élevée que les fromages traditionnels.

Le procédé selon l'invention peut également être appliqué à la fabrication d'autres fromages de gruyère hyposodés par exemple de l'emmenthal ou du fribourg. Les meules obtenues après moulage sous presse de la pâte cuite préparée dans les conditions requises pour que les fromages bénéficient de leurs appellations propres sont, de façon analogue, soumises à un traitement d'affinage au moyen d'une composition concentrée telle que définie précédemment.

Le procédé s'applique à d'autres fromages que les fromages de gruyère, notamment aux fromages à pâte pressée non cuite et aux fromages à pâte molle déjà mentionnés. La solution concentrée de l'invention sera alors utilisée pour le salage de ces autres fromages, en remplacement du chlorure de sodium, et en suivant les méthodes de salage propres à chaque type de fromage considéré.

**Revendications**

1. Procédé de fabrication d'un fromage hyposodé, comportant une opération de salage dudit fromage, caractérisé en ce qu'on utilise pour cette opération une solution aqueuse concentrée, qui consiste en un sous-produit qui résulte de l'extraction physique du chlorure de sodium à partir de l'eau de mer et qui contient principalement un sel de magnésium ainsi qu'une faible teneur résiduelle en chlorure de sodium.

2. Procédé selon la revendication 1, caractérisé en ce que le magnésium de la solution concentrée est présent principalement sous la forme de chlorure de magnésium hexa-hydraté, de préférence à raison de 250 à 900 grammes par litre de solution aqueuse.

3. Procédé selon la revendication 2, caractérisé en ce que la solution comprend, outre le chlorure de magnésium hexa-hydraté, d'autres sels minéraux, en particulier du sulfate de magnésium, de l'oxyde de magnésium, du chlorure de potassium et du chlorure de sodium.

4. Procédé selon l'une des revendications 1 à 3, pour la fabrication de fromage de gruyère, caractérisé en ce que la meule obtenue après démoulage du caillé moulé sous presse est soumise à un affinage au cours duquel la meule est traitée par ladite solution concentrée.

5. Procédé selon la revendication 4, pour la fabrication de comté, caractérisé en ce que la meule obtenue après démoulage du caillé moulé sous presse est soumise à un affinage en cave chaude, à une température de l'ordre de 16 à 18°C, pendant une période d'au moins 90 jours, au cours de laquelle la meule est régulièrement retournée puis frottée en faisant appel à ladite solution concentrée.

6. Procédé selon la revendication 5, caractérisé en ce que l'affinage est précédé facultativement d'un pré-affinage en cave froide, à une température de l'ordre de 6 à 12°C, au cours duquel la meule est régulièrement retournée puis frottée en faisant appel à ladite solution concentrée.

7. Procédé selon l'une des revendications 5 et 6, caractérisé en ce que l'affinage ou le pré-affinage, s'il est présent, débute par une immersion de la meule dans ladite solution concentrée, pendant une période d'environ 24 heures.

8. Procédé selon l'une des revendications 5 à 7, caractérisé en ce que, après l'affinage, la meule est conservée jusqu'à sa vente en cave froide, sans subir de traitement ultérieur par ladite solution concentrée.

9. Fromage, en particulier fromage de gruyère, susceptible d'être obtenu par la mise en œuvre du procédé selon l'une des revendications 1 à 8.

10. Fromage de gruyère selon la revendication 9, susceptible d'être obtenu par la mise en œuvre du procédé selon l'une des revendications 1 à 8, caractérisé par une teneur en magnésium comprise entre 60 et 100 milligrammes et une teneur en sodium inférieure à 60 milligrammes our 100 grammes de fromage.

**Patentansprüche**

1. Verfahren zur Herstellung von Käse mit vermindertem Natriumgehalt, mit einer Salzbehandlung des genannten Käses, dadurch gekennzeichnet, dass für diesen Vorgang eine konzentrierte wässrige Lösung verwendet wird, die aus einem sich bei der physikalischen Extraktion des Natriumchlorids aus dem Meerwasser ergebenden Nebenprodukt besteht, das in der Hauptsache ein Magnesiumsalz sowie einen geringen Restanteil an Natriumchlorid enthält.

2. Verfahren nach Anspruch 1, dadurch gekennzeichnet, dass das Magnesium der konzentrierten Lösung wesentlich in der Form von hexahydriertem Magnesiumchlorid mit vorzugsweise 250 bis 900 Gramm pro Liter wässriger Lösung vorliegt.

3. Verfahren nach Anspruch 2, dadurch gekennzeichnet, dass die Lösung ausser dem hexahydrierten Magnesiumchlorid andere Mineralsalze, insbesondere Magnesiumsulfat, Magnesiumoxid, Kaliumchlorid und Natriumchlorid enthält.

4. Verfahren nach einem der vorstehenden Ansprüche 1 bis 3, für die Herstellung von Schweizer Käse, dadurch gekennzeichnet, dass der nach dem Ausformen des Bruches aus der Pressform erhaltene Laib einem Reifungsprozess unterworfen wird, in dessen Verlauf der Laib mit der vorgenannten konzentrierten Lösung behandelt wird.

5. Verfahren nach Anspruch 4, für die Herstellung von Comté-Käse, dadurch gekennzeichnet, dass der nach dem Ausformen des Bruches aus der Pressform erhaltene Laib einem Reifungsprozess im Warmkeller bei einer Temperatur von etwa 16 bis 18°C unterworfen wird, und zwar für eine Dauer von wenigstens 90 Tagen, in deren Verlauf der Laib regelmässig gewendet und unter Verwendung der vorgenannten konzentrierten Lösung abgerieben wird.

6. Verfahren nach Anspruch 5, dadurch gekennzeichnet, dass dem Reifungsprozess ein fakultativer Vorreifungsprozess im Kaltkeller bei einer Temperatur von etwa 6 bis 12°C vorausgehen kann, in dessen Verlauf der Laib regelmässig gewendet und unter Verwendung der vorgenannten konzentrierten Lösung abgerieben wird.

7. Verfahren nach einem der vorstehenden Ansprüche 5 und 6, dadurch gekennzeichnet, dass der Reifungsprozess oder eventuell der Vorreifungsprozess mit einem Versenken des Laibes in der konzentrierten Lösung für eine Dauer von etwa 24 Stunden beginnt.

8. Verfahren nach einem der vorstehenden Ansprüche 5 bis 7, dadurch gekennzeichnet, dass der Laib nach dem Reifungsprozess bis zum Verkauf im Kaltkeller ohne weitere Behandlung mit der konzentrierten Lösung aufbewahrt wird.

9. Käse, insbesondere Schweizer Käse, der durch den Einsatz des Verfahrens nach einem der vorstehenden Ansprüche 1 bis 8 hergestellt werden kann.

10. Schweizer Käse nach Anspruch 9, der durch den Einsatz des Verfahrens nach einem der vorstehenden Ansprüche 1 bis 8, hergestellt werden kann, dadurch gekennzeichnet, dass er einen Magnesiumgehalt von 60 bis 100 Milligramm und einen Natriumgehalt von weniger als 60 Milligramm pro 100 Gramm Käse aufweist.

**Claims**

1. A method of making a low-sodium cheese, the method including an operation of salting said cheese, the method being characterized in that a concentrated aqueous solution is used for said operation, said solution consisting in a by-product which results from the physical extraction of sodium chloride from sea water and which mainly contains a magnesium salt together with a low residual concentration of sodium chloride.

2. A method according to claim 1, characterized in that the magnesium of the concentrated solution is mainly present in the form hexahydrated magnesium chloride, preferably at a concentration of 250 to 900 grammes per liter of aqueous solution.

3. A method according to claim 2, characterized in that in addition to the hexahydrated magnesium chloride, the solution includes other inorganic salts, in particular magnesium sulphate, magnesium oxide, potassium chloride, and sodium chloride.

4. A method according to any one of claims 1 to 3, for making Gruyère type cheese, characterized in that the cheese obtained after unmoulding the curd which has been moulded under pressure is subjected to ripening during which the cheese is treated with said concentrated solution.

5. A method according to claim 4, for making Comté type cheese, characterized in that the cheese obtained after unmoulding the curd moulded under pressure is subjected to ripening in a warm room, at a temperature of about 16°C to about 18°C, for a period of at least 90 days, during which the cheese is regularly turned over and rubbed using said concentrated solution.

6. A method according to claim 5, characterized in that the ripening is optionally preceded by pre-ripening in a cold room, at a temperature of about 6°C to 12°C, during which the cheese is regularly turned aver and rubbed using said concentrated solution.

7. A metod according to claim 5 or 6, characterized in that the ripening or the pre-ripening, if present, begins by immersing the cheese in said concentrated solution for a period of about 24 hours.

8. A method according to any one of claims 5 to 7, characterized in that after ripening the cheese is conserved up to sale in a cold room, without subsequent treatment by said concentrated solution.

9. A cheese, in particular a Gruyère type cheese, as obtained by implementing the method according to any one of claims 1 to 8.

10. A Gruyère type cheese according to claim 9, as obtained by implementing the method according to any one of claims 1 to 8, characterized in that the magnesium concentration per 100 grammes of cheese lies between 60 and 100 milligrammes and the sodium concentration is less than 60 milligrammes.